# FASCICULE DE BREVET EUROPEEN

(11) **EP 1 786 303 B1**
(45) Date de publication et mention de la délivrance du brevet: **02.04.2008**
(21) Numéro de dépôt: 05775860.9
(22) Date de dépôt: 26.07.2005
(51) Int. Cl.: A47J 31/40

(54) **DISPOSITIF DE PRODUCTION DE BOISSON AVEC MOYEN DE DETECTION**
MIT EINEM ERFASSUNGSMITTEL VERSEHENE VORRICHTUNG ZUR ZUBEREITUNG EINES GETRÄNKS
DEVICE FOR THE PRODUCTION OF A BEVERAGE, PROVIDED WITH A MEANS OF DETECTION

(30) Priorité: 10.08.2004 FR 0451829
(43) Date de publication de la demande: 23.05.2007
(73) Titulaire: COMPAGNIE MEDITERRANEENNE DES CAFES S.A., 06510 Carros (FR)
(72) Inventeur: BLANC, Jean-Pierre Office Méditerranéen de Brevets, F-06000 NICE (FR); FERRIER, Christian Office Méditerranéen de Brevets, F-06000 NICE (FR)
(74) Mandataire: Decobert, Jean-Pascal
(86) Numéro de dépôt international: PCT/EP2005/053645
(87) Numéro de publication internationale: WO 2006/032564

(56) Documents cités:
- WO-A-02/28241
- US-A- 5 798 037
- US-B1- 6 505 544
- US-B1- 6 557 458

## Description

La présente invention concerne un dispositif de production de boisson par infusion d'une matière à infuser contenue dans un conditionnement jetable.

Elle trouvera en particulier son application dans le domaine de la fabrication de machines à café utilisant des emballages contenant de la mouture de café.

L'invention s'adresse notamment à des machines utilisant des dosettes à base de papier filtre du type décrit dans le document WO-A-94/01039.

Cela étant, cette application n'est pas limitative et l'invention pourra être mise en oeuvre avec d'autres types de conditionnement jetable tels des capsules rigides perméables ou imperméables.

On connaît des documents WO-A-98/02871 et US-6505544 une machine à café utilisant des conditionnements individuels de mouture de café permettant une insertion verticale du conditionnement par le biais d'un ensemble de guidage de la dosette orienté sensiblement verticalement et apte à guider par coulissement le conditionnement jusqu'à la chambre d'infusion.

Cette chambre est généralement constituée de deux parties pouvant être configurées en fermeture pour réaliser la phase d'infusion par écoulement d'eau au travers du conditionnement et en ouverture pour permettre les phases d'introduction et d'éjection du conditionnement relativement à la chambre.

On connaît par ailleurs des conditionnements pour café moulu présentant un code d'identification de sorte à pouvoir être identifiés lors de leur utilisation.

Le document WO-A-02/28241 décrit un tel conditionnement avec plusieurs variantes de marquages. Il peut s'agir d'un contour spécifique donné au conditionnement, une couleur prédéterminée ou encore la présence d'un code barre.

Le but du marquage est généralement de rendre sélectif le fonctionnement de la machine en n'autorisant l'emploi que de certaines catégories de conditionnement.

L'identification peut aussi servir à adapter des paramètres de fonctionnement du dispositif d'infusion suivant le type de matière à infuser, notamment suivant les qualités de mouture de café.

Même si le principe de détection d'un marquage sur un conditionnement jetable offre de nombreuses possibilités nouvelles d'utilisation des dispositifs d'infusion, il existe un besoin d'améliorer la lecture du marquage porté par le conditionnement.

La présente invention s'inscrit en ce cadre et propose une nouvelle conception de dispositif pour l'infusion avec des moyens de détection d'un marquage d'identification porté par le conditionnement réalisés et positionnés de façon spécifique relativement au reste du dispositif.

En particulier, selon l'invention, les moyens de détection sont réalisés dans une glissière servant au guidage du conditionnement.

De cette façon, on est assuré du bon positionnement du conditionnement relativement aux moyens de détection (fiabilité du positionnement du conditionnement relativement aux moyens de détection, distance réduite et aisément déterminable entre les moyens de détection et la zone du conditionnement à identifier, etc.).

La présente invention a également l'avantage d'assurer une intégration parfaite des moyens de détection dans le reste de la machine sans créer de protubérances d'encombrement supplémentaire susceptible de rendre plus complexe la conception de la machine et de gêner l'introduction et le guidage des conditionnements jetables.

De façon préférée et avantageuse, l'invention assure un montage pratique et un positionnement précis des moyens de détection sur la machine.

En outre, les moyens de détection peuvent être démontables notamment en cas de panne.

D'autres buts et avantages apparaîtront au cours de la description qui suit d'un mode préféré de réalisation de l'invention qui n'en est cependant pas limitatif.

La présente invention concerne un dispositif de production de boissons par infusion d'une matière à infuser contenue dans un conditionnement jetable, comportant :

- une chambre d'infusion à configuration variable entre une position ouverte et une position fermée pour l'infusion,

- des moyens de guidage du conditionnement depuis une zone d'introduction vers la chambre d'infusion, les moyens de guidage comportant une glissière apte à coopérer avec la périphérie du conditionnement, caractérisé par le fait qu'il comporte des moyens de détection d'un marquage d'identification réalisé sur le conditionnement, lesdits moyens de détection étant formés dans la glissière.

- les moyens de détection sont des moyens de reconnaissance d'au moins une couleur.

- les moyens de détection comportent :
- une diode apte à émettre une lumière avec un spectre fréquentiel prédéfini vers une zone cible du conditionnement ;
- un composant de détection apte à capter la lumière transmise ou réfléchie par le conditionnement et à l'interpréter pour identifier le marquage du conditionnement. Suivant des variantes préférées de l'invention, ce dispositif est tel que :

- les moyens de détection comprennent un support avec une section en U formant une portion de la glissière.

- le support est enfichable dans le corps de la glissière.

- il comporte un capteur de présence formé sur la glissière immédiatement en amont de la chambre d'infusion pour détecter un éventuel blocage du conditionnement.

- la glissière est inclinée par rapport à l'horizontale.

Les dessins ci-joints sont donnés à titre d'exemples et ne sont pas limitatifs de l'invention. Ils représentent seulement un mode de réalisation de l'invention et permettront de la comprendre aisément.

La figure 1 est une vue schématique du dispositif de l'invention en vue de côté et avec une coupe partielle dans un premier mode de réalisation.

Les figures 2 et 3 illustrent en perspective certains composants du dispositif de l'in vention dans un mode de réalisation additionnel.

La figure 4 est un exemple de configuration des moyens de détection utilisables.

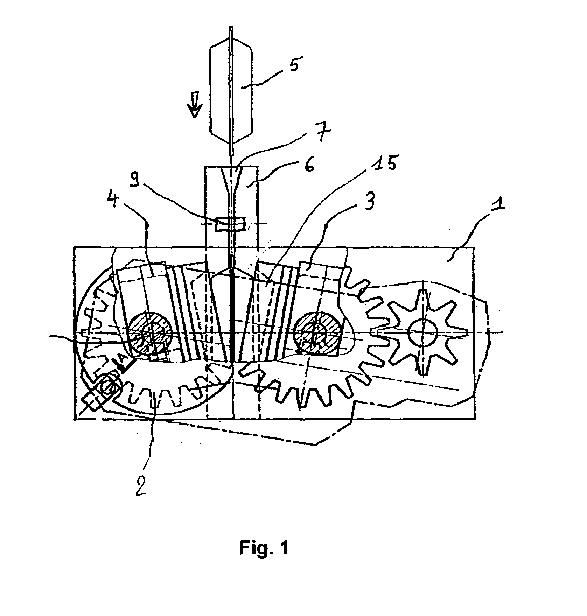

On a représenté en figure 1 les éléments essentiels d'un dispositif de production de boissons par infusion présentant des parties mobiles 3, 4 aptes à être modifiées dans leur configuration de sorte à réaliser une chambre d'infusion 15 ouverte ou fermée suivant leur position.

Un tel fonctionnement est décrit dans le document WO-A-98/02871.

Bien entendu, il n'est pas limitatif de l'invention et celle-ci s'applique à tout type de dispositif présentant une chambre d'infusion apte à être ouverte et fermée suivant les phases de fonctionnement, par exemple par translation et/ou rotation.

Dans le cas représenté, un conditionnement jetable 5 contenant par exemple la mouture de café peut être introduit au niveau d'une zone d'introduction 7 dans le dispositif.

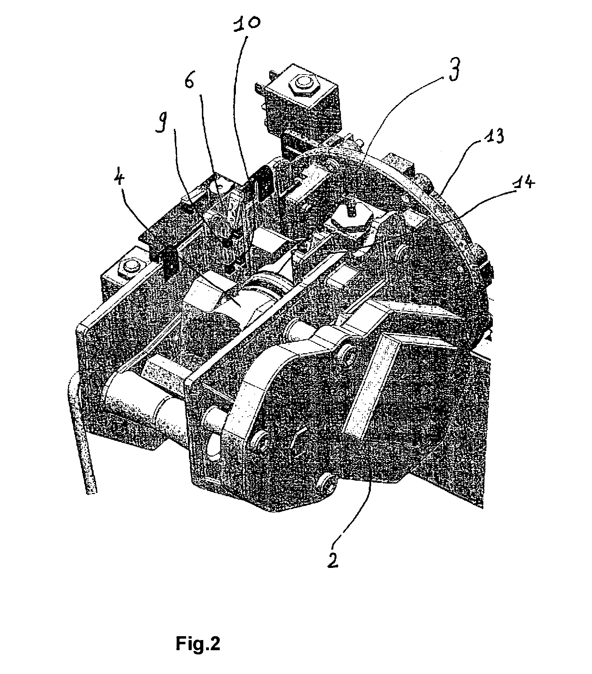

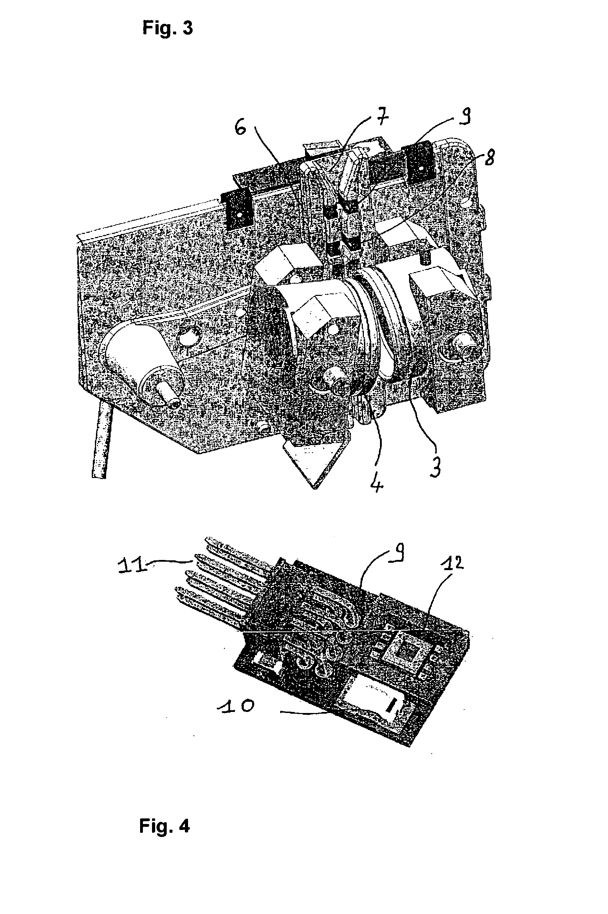

Ce dispositif comporte des parties mobiles 3, 4 montées oscillantes et avec un mouvement de rapprochement et d'éloignement possible relativement à un châssis 1 de sorte à pouvoir d'une part fermer la chambre d'infusion lors de la phase d'écoulement de fluide et d'autre part réaliser une ouverture de la chambre d'infusion orientée vers le haut (comme dans le cas de la figure 1) pour la phase d'introduction du conditionnement 5 ou vers le bas (cf figures 2 et 3) pour réaliser la mise en butée d'un nouveau conditionnement au dessus de la chambre d'infusion 15 et/ou d'éjection d'un conditionnement usagé par la partie inférieure du dispositif.

De façon connue en soi, le dispositif comprend en outre une chaudière 13 apte à alimenter la chambre d'infusion 15 lorsque celle-ci est en position fermée de sorte à réaliser l'étape d'infusion.

Un système de pompe est également généralement prévu pour réaliser une lixiviation forcée.

Les figures 1 et 2 montrent à titre indicatif, un exemple de réalisation de moyens d'entraînement 2 (ici sous forme d'une motorisation et de roues dentées) permettant la transmission de puissance depuis la motorisation jusqu'aux parties mobiles 3, 4.

Comme indiqué précédemment, cette conception n'est cependant pas limitative de l'invention.

Tel que visible aux figures 1 à 3, le dispositif comprend en outre des moyens de guidage sous forme d'une glissière 6 et d'une glissière secondaire 14 aptes à permettre le coulissement du conditionnement 5 depuis une zone d'introduction 7 jusqu'à la chambre d'infusion 15 et, possiblement, après la chambre d'infusion 15, vers une zone d'éjection.

Dans le cas représenté, la glissière 6 et la glissière secondaire 14 sont de forme extérieure sensiblement identique et sont positionnées symétriquement relativement à la chambre d'infusion sensiblement au niveau du plan d'application des parties mobiles 3, 4 en position fermée.

Les éléments allongés constitutifs des glissières 6, 14 comprennent une rainure longitudinale apte à coopérer avec une partie de la périphérie du conditionnement jetable de largeur adaptée pour réaliser un ajustement glissant de sorte à former des moyens de guidage.

Le conditionnement 5 représenté est un exemple de ceux utilisables avec le dispositif de l'invention mais n'en est pas limitatif.

En effet, il pourrait s'agit d'une capsule sensiblement sous forme d'un petit réceptacle rigide et présentant un rebord apte à coopérer avec la glissière 6.

Le conditionnement 5 comporte un marquage au niveau de sa périphérie apte à coopérer avec la glissière 6 de sorte à réaliser la détection du type de marquage par le dispositif de l'invention.

On décrit ci-après un mode préféré de réalisation dans lequel le marquage est constitué par une couleur prédéterminée.

On entend par couleur, une nuance de couleur apte à être individualisée par des moyens de détection.

Le dispositif de l'invention peut être apte à reconnaître une ou plusieurs couleurs suivant le mode de fonctionnement du dispositif.

De façon caractéristique, la glissière 6 comporte des moyens de détection 9 dont un exemple est présenté en figure 1 en vue de face.

Les figures 2 et 3 en donnent un autre exemple en perspective.

Dans le cas représenté, les moyens de détection 9 comportent un support général en matière plastique rigide et présentant une section transversale en U.

A l'arrière du U, une connectique est ménagée pour réaliser la connexion électrique des moyens de détection 9.

Cette configuration avantageuse permet de faire en sorte que les moyens de détection 9 forment une portion de la glissière 6.

Le positionnement des moyens de détection 9 relativement à la périphérie du conditionnement 5 sur lequel la détection est à réaliser est donc ainsi très fiable.

En outre, tels que représentés aux figures 2 et 3, les moyens de détection 9 sont faciles à enficher ou à démonter relativement au reste de la glissière 6.

La figure 4 illustre un autre mode de réalisation des moyens de détection 9 sous forme d'un support sensiblement plan.

Ce support reçoit une diode 10 du type LED (light emetting diod) apte à émettre une lumière dans un spectre de fréquence prédéterminé (par exemple lumière blanche) en direction d'une zone ciblée de la périphérie du conditionnement 5 coopérant avec la glissière 6.

La diode 10 émet une telle lumière en direction du conditionnement 5 qui, s'il est opaque, réfléchit une partie de cette lumière, la lumière réfléchie étant variable suivant la couleur de la surface de réflexion du conditionnement 5.

La lumière ainsi réfléchie est renvoyée à un composant de détection 12 comportant une pluralité de cellules photosensibles à une portion du spectre de la lumière.

L'excitation sélective des cellules assure la formation d'un signal électrique sous forme de tension représentative de la lumière réfléchie.

Le composant de détection 12 comprend en outre de façon intégrale ou séparée, des moyens aptes à interpréter cette tension électrique pour déterminer la nuance de couleur lue sur le conditionnement 5.

Par exemple, le composant de détection 12 comporte un convertisseur tension/ fréquence permettant la transformation du signal électrique de détection en une fréquence représentative d'une lumière d'un spectre fréquentiel prédéterminé.

Ce signal fréquentiel issu de la conversion peut être comparé avec des signaux types prédéfinis et mémorisés dans le composant.

Une comparaison est alors opérée de sorte à déterminer si le signal fréquentiel issu de la détection est identique à l'un des (ou aux) signaux de référence mémorisés.

Si la comparaison est positive, le composant de détection 12 indique alors que la couleur du conditionnement 5 a été reconnue.

Les connexions 11 permettent l'entrée et la sortie de signaux électriques depuis et vers les moyens de détection 9.

La figure 4 représente le cas de moyens de détection 9 fonctionnant de façon réflective c'est-à-dire utilisant la surface cible du conditionnement 5 comme surface de réflexion pour la mesure de la lumière réfléchie.

Cependant, on peut également utiliser des moyens de détection 9 fonctionnant de façon transmitive c'est-à-dire apte à détecter la lumière transmise au travers la zone cible du conditionnement 5.

Dans ce cadre, la zone cible du conditionnement 5 sera d'une couleur prédéterminée et non opaque de sorte à permettre une transmission partielle de la lumière au travers de son épaisseur.

Dans ce cas, la diode 10 et le composant de détection 12 sont positionnés en vis-à-vis relativement à la glissière 6.

Toujours de façon avantageuse, le dispositif de l'invention intègre un capteur de présence 8 situé dans le cas représenté entre les moyens de détection 9 et la chambre d'infusion 15 comme dans le mode de réalisation des figures 2 et 3.

Plus précisément, le capteur de présence 8 est situé immédiatement en amont de la chambre d'adhésion 15 relativement au sens d'introduction du conditionnement 5.

Ce capteur de présence 8 est utilisé pour s'assurer que le conditionnement 5 n'est pas bloqué à ce niveau.

En particulier, une phase d'infusion ne pourra être lancée si le capteur de présence 8 a détecté la présence d'un emballage 5 à son niveau.

On décrit ci-après plus précisément un mode de fonctionnement du dispositif de l'invention.

L'utilisateur introduit un conditionnement 5 au niveau de la zone d'introduction 7 généralement quelque peu évasée de sorte à faciliter l'étape d'introduction.

Le conditionnement 5 est ainsi amené à glisser dans les moyens de guidage formés de la glissière 6 de la glissière secondaire 14.

En constituant les glissières 6 et 14 de façon suffisamment inclinées relativement à l'horizontale, la gravité produit naturellement la descente des conditionnements 5.

Ce faisant, le conditionnement 5 parvient en butée sur la face supérieure des parties mobiles 3 et 4 et ce, en préservant une zone de sa périphérie en vis-à-vis des moyens de détection 9.

Ces moyens assurent alors la lecture du marquage présent sur le conditionnement 5.

Si ce marquage est reconnu par les moyens de détection 9, il s'ensuit une ouverture de la chambre d'infusion 15 de sorte à autoriser l'admission de l'emballage 5 puis une fermeture de la chambre d'infusion 15 pour réaliser l'infusion et enfin, une éjection du conditionnement 5 par ouverture vers le bas de ladite chambre 15.

Si le marquage du conditionnement 5 n'est pas reconnu par les moyens de détection 9, un message vocal ou visuel peut apparaître à destination de l'utilisateur pour lui indiquer que le type de conditionnement qu'il a introduit n'est pas utilisable avec le dispositif.

Il est également possible dans ce cas de détection d'actionner les parties mobiles 3, 4 de sorte à éjecter directement le conditionnement 5 sans réaliser l'infusion.

Comme indiqué précédemment, les moyens de détection 9 peuvent également permettre la reconnaissance d'une pluralité de nuance de couleur pour adapter les paramètres d'infusion au type de conditionnement 5 considéré.

On peut ainsi générer une augmentation de température d'eau d'infusion, augmenter ou diminuer la pression ou encore la durée d'infusion et le volume d'eau injecté.

REFERENCES
- 1.: Châssis
- 2.: Moyens d'entraînement
- 3.: Partie mobile
- 4.: Partie mobile
- 5.: Conditionnement
- 6.: Glissière
- 7.: Zone d'introduction
- 8.: Capteur de présence
- 9.: Moyens de détection
- 10.: Diode
- 11.: Connexions
- 12.: Composant de détection
- 13.: Chaudière
- 14.: Glissière secondaire
- 15.: Chambre d'infusion

## Revendications

1. Dispositif de production de boissons par infusion d'une matière à infuser contenue dans un conditionnement (5) jetable, comportant :
- une chambre d'infusion (15) à configuration variable entre une position ouverte et une position fermée pour l'infusion,
- des moyens de guidage du conditionnement (5) depuis une zone d'introduction (7) vers la chambre d'infusion (15), les moyens de guidage comportant une glissière (6) apte à coopérer avec la périphérie du conditionnement (5), **caractérisé par le fait**
**qu'**il comporte des moyens de détection (9) d'un marquage d'identification réalisé sur le conditionnement (5), lesdits moyens de détection (9) étant formés dans la glissière (6) sous forme de moyens de reconnaissance d'au moins une couleur comportant :
- une diode (10) apte à émettre une lumière avec un spectre fréquentiel prédéfini vers une zone cible du conditionnement (5);
- un composant de détection (12) apte à capter la lumière transmise ou réfléchie par le conditionnement (5) et à l'interpréter pour identifier le marquage du conditionnement (5).

2. Dispositif selon la revendication 1 **caractérisé par le fait**
**que** les moyens de détection (9) comprennent un support avec une section en U formant une portion de la glissière.

3. Dispositif selon la revendication 2 **caractérisé par le fait**
**que** le support est enfichable dans le corps de la glissière (6).

4. Dispositif selon l'une quelconque des revendications 1 à 3, **caractérisé par le fait**
**qu'**il comporte un capteur de présence (8) formé sur la glissière (6) immédiatement en amont de la chambre d'infusion (15) pour détecter un éventuel blocage du conditionnement (5).

5. Dispositif selon l'une quelconque des revendications 1 à 4, **caractérisé par le fait**
**que** la glissière (6) est inclinée par rapport à l'horizontale.

## Claims

1. Device for production of beverages by infusion of a substance to be infused contained in a discardable pack (5), comprising:
- an infusion chamber (15) with a configuration which can be varied between an open position and a closed position for the infusion;
- means for guiding the pack (5) from an introduction zone (7) to the infusion chamber (15), the guiding means comprising a slide (6) capable of co-operating with the periphery of the pack (5),
**characterised in that**
it comprises means (9) for detecting an identification mark made on the pack (5), said detection means (9) being formed in the slide (6) in the form of means for recognition of at least one colour comprising:
- a diode (10) capable of emitting a light with a predefined frequency spectrum in the direction of a target zone of the pack (5);
- a detection component (12) capable of picking up the light transmitted or reflected by the pack (5) and interpreting it to identify the mark of the pack (5).

2. Device according to claim 1, **characterised in that** the detection means (9) comprise a support with a U-shaped section forming a portion of the slide.

3. Device according to claim 2, **characterised in that** the support can be plugged into the body of the slide (6).

4. Device according to any one of claims 1 to 3, **characterised in that** it comprises a presence sensor (8) formed on the slide (6) immediately upstream of the infusion chamber (15) to detect any blockage of the pack (5).

5. Device according to any one of claims 1 to 4, **characterised in that** the slide (6) is inclined in relation to the horizontal.

## Patentansprüche

1. Vorrichtung zur Herstellung von Getränken durch Aufgießen eines Aufgussstoffes, der in einer Wegwerfverpackung (5) eingeschlossen ist, mit einer Aufgusskammer (15) mit einer variablen Konfiguration zwischen einer offenen Stellung und einer zum Aufgießen geschlossenen Stellung, Führungseinrichtungen der Verpackung (5) von einer Einleitungszone (7) zur Aufgusskammer (15), wobei die Führungseinrichtungen eine Gleitschiene (6) aufweisen, die ausgebildet ist, um mit einem Umfang der Verpackung (5) zusammenzuwirken,
**dadurch gekennzeichnet,**
**dass** sie die Erfassungseinrichtungen (9) einer Identifikationsmarkierung auf der Verpackung (5) enthält, wobei die Erfassungseinrichtungen (9) in der Gleitschiene (6) in der Form einer Erkennungseinrichtungen wenigstens einer Farbe ausgebildet sind und aufweist:
- eine Diode (10) zum Aussenden von Licht mit einem vordefinierten Frequenzspektrum zu einer Zielzone der Verpackung (5);
- ein Erfassungselement (12) zum Erfassen des ausgesendeten oder von der Verpackung (5) reflektierten Lichts und zum Auswerten zur Identifikation der Markierung der Verpackung (5).

2. Vorrichtung nach Anspruch 1,
**dadurch gekennzeichnet,**
**dass** die Erfassungsseinrichtungen (9) einen Träger mit einem U-förmigen Schnitt umfassen, der einen Teil der Gleitschiene bildet.

3. Vorrichtung nach Anspruch 2,
**dadurch gekennzeichnet,**
**dass** der Träger in den Körper der Gleitschiene (6) steckbar ist.

4. Vorrichtung nach einem der Ansprüche 1 bis 3,
**dadurch gekennzeichnet,**
**dass** sie einen Anwesenheitssensor (8) aufweist, der unmittelbar stromauf der Aufgusskammer (15) an der Gleitschiene (6) ausgebildet ist, zum Erfassen einer etwaigen Blockade der Verpackung.

5. Vorrichtung nach einem der Ansprüche 1 bis 4,
**dadurch gekennzeichnet,**
**dass** die Gleitschiene (6) relativ zur Horizontalen geneigt ist.
